# DEMANDE DE BREVET EUROPEEN

(11) **EP 0 544 552 A1**
(43) Date de publication de la demande: **02.06.1993**
(21) Numéro de dépôt: 92402985.3
(22) Date de dépôt: 04.11.1992
(51) Int. Cl.: F16H 57/04, F01P 3/20

(54) **Dispositif de refroidissement par eau d'une boîte de vitesses**

(30) Priorité: 26.11.1991 FR 9114865
(71) Demandeur: AUTOMOBILES PEUGEOT, F-75116 Paris (FR); AUTOMOBILES CITROEN, F-92200 Neuilly sur Seine (FR)
(72) Inventeur: Sitbon, Gérald, F-94400 Vitry-sur-Seine (FR)
(74) Mandataire: Fabien, Henri

(57) **Abrégé**

La présente invention a pour objet un dispositif de refroidissement par eau de l'huile d'une boite de vitesse automatique dont le refroidisseur (5) a son entrée et sa sortie reliées à la conduite (4) reliant le radiateur (2) et la pompe à eau (1) du circuit de refroidissement du moteur, de part et d'autre d'un dispositif de calibrage (10).

Selon l'invention, ce dispositif de calibrage (10) est à diamètre variable en fonction du débit, le diamètre augmentant en même temps que le débit.

## Description

L'invention concerne un dispositif de refroidissement de l'huile d'une boîte de vitesse automatique d'un véhicule automobile comportant un refroidisseur constitué par un échangeur de chaleur utilisant comme source froide l'eau de refroidissement du moteur à combustion interne de ce véhicule.

Le refroidisseur peut être branché en parallèle avec le radiateur d'eau de ce véhicule. L'eau parcourt ainsi le refroidisseur grâce à la perte de charge due au radiateur. Mais le refroidisseur est alors alimenté par de l'eau non encore refroidie provenant du moteur, ce qui diminue son efficacité.

Le refroidisseur peut également avoir son entrée et sa sortie reliées à la conduite reliant le radiateur et la pompe à eau, de part et d'autre d'un orifice calibré. Le refroidisseur est ainsi alimenté par de l'eau refroidie sortant du radiateur, mais la perte de charge engendrée par l'orifice calibré augmente avec le régime moteur, de sorte que le refroidissement du moteur est moins efficace à haut régime.

La présente invention a pour objet un dispositif de refroidissement par eau d'une boîte de vitesse automatique d'un véhicule automobile, dont le refroidisseur est connecté à la conduite reliant le radiateur à la pompe, de part et d'autre d'un dispositif de calibrage, qui remédie à l'inconvénient signalé ci-dessus.

Ce dispositif de refroidissement est caractérisé en ce que le dispositif de calibrage est à diamètre variable en fonction du débit, le diamètre augmentant en même temps que le débit.

Le dispositif de calibrage peut comporter une partie tronconique de section décroissante d'amont en aval fendue axialement et des moyens élastiques tendant à resserrer cette partie tronconique. Ces moyens élastiques peuvent être constitués par un ressort annulaire logé dans un bourrelet torique ouvert disposé à l'extrémité aval de la partie tronconique. La partie tronconique peut être fendue suivant deux plans axiaux.

On a décrit ci-après, à titre d'exemple non limitatif, un mode de réalisation du dispositif de refroidissement selon l'invention, avec référence aux dessins annexés dans lesquels :
La Figure 1 est un schéma du dispositif de refroidissement;
La Figure 2 est une vue en coupe axiale du dispositif de calibrage, l'orifice calibré étant au diamètre minimum, fente refermée;
La Figure 3 en est une coupe suivant III-III de la Figure 2;

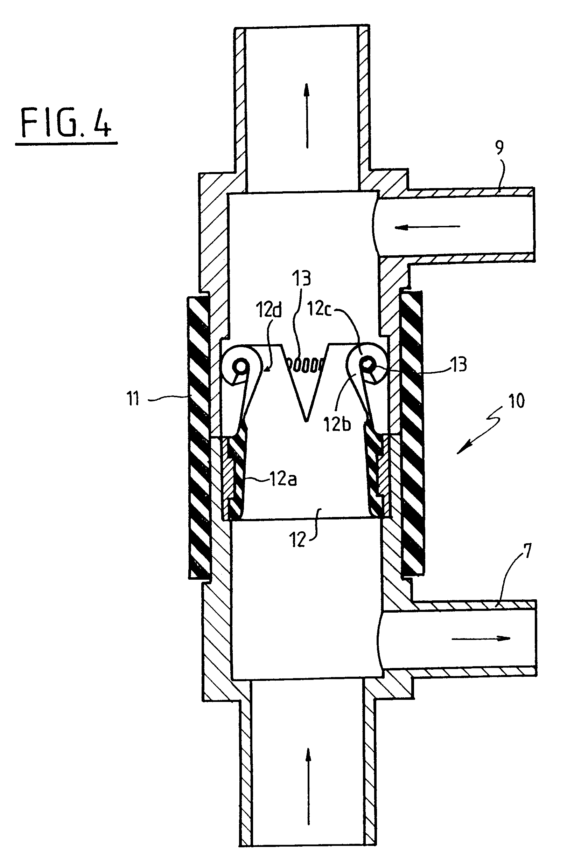

La Figure 4 est une vue semblable à la Figure 2, l'orifice calibré étant au maximum, fentes ouvertes.

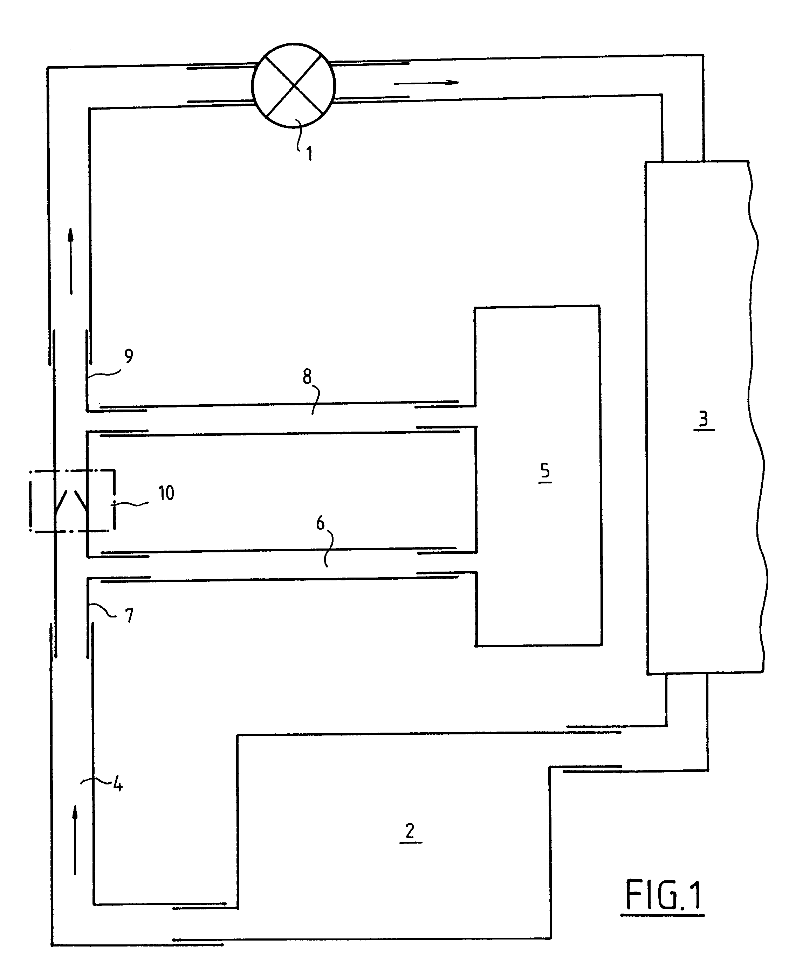

A la Figure 1 on voit la pompe à eau 1 d'un véhicule automobile, dont le refoulement est relié au radiateur 2 par le circuit de refroidissement du moteur 3. La sortie du radiateur 2 est reliée par une conduite 4 à l'admission de la pompe 1. L'entrée du réfrigérateur 5 d'une boîte de vitesse automatique est reliée par une conduite 6 et un raccord 7 à la conduite 4; de même la sortie de ce réfrigérateur est reliée à la conduite 4 par une conduite 8 et un raccord 9. Entre les deux raccords 7 et 9 est interposé un dispositif de calibrage 10 à diamètre variable en fonction du débit.

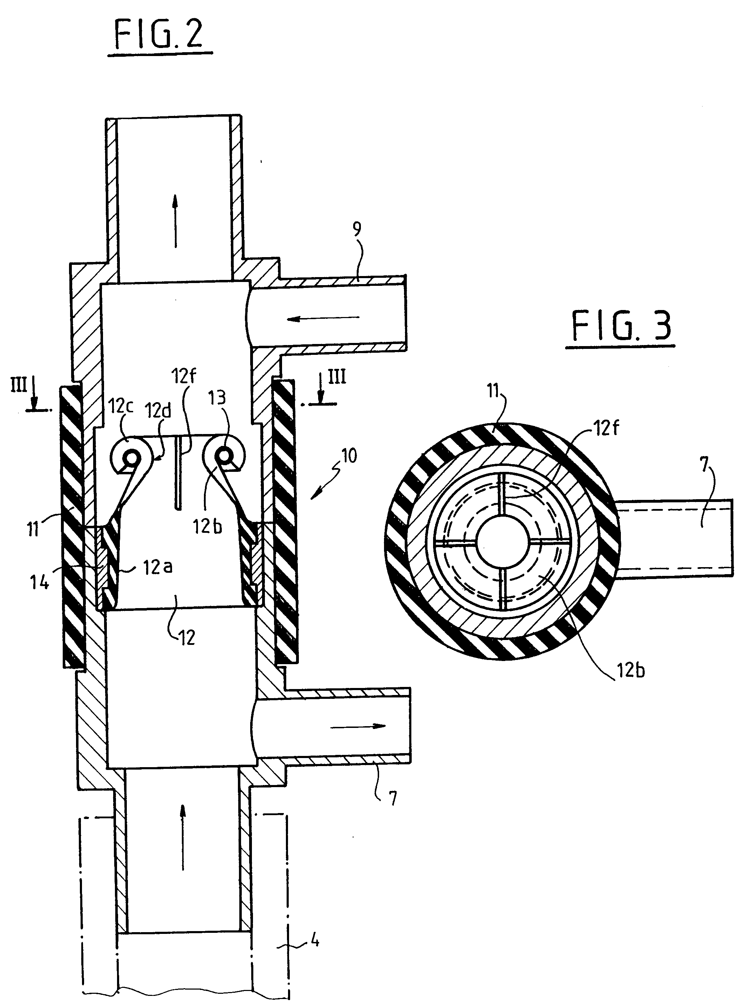

Comme on le voit plus particulièrement aux Figures 2 et 3, le dispositif de calibrage 10 est formé des deux raccords 7 et 9 et d'un manchon 11 dans lequel ces raccords sont enfilés. Dans l'un de ces raccords est emmanchée la partie cylindrique 12a d'une bague de calibrage 12 en élastomère renforcée par une bague métallique 14. La partie cylindrique 12a de la bague 12 est prolongée par une partie tronconique 12b de section décroissante d'amont en aval, se terminant par un bourrelet torique ouvert 12c dans lequel est logé un ressort annulaire 13. La partie tronconique 12b fendue suivant quatre fentes 12f par deux plans axiaux tend ainsi à être resserrée par le ressort 13 au niveau du col 12d.

En fonctionnement, l'eau qui sort du radiateur 2 exerce sur les parties tronconiques 12b une force qui tend à les écarter et qui est proportionnelle au débit d'eau de refroidissement lui-même proportionnel au régime moteur. Le ressort 13 se dilate jusqu'à ce qu'il soit en équilibre avec la force engendrée par l'eau. La perte de charge engendrée par le dispositif de calibrage 10 assure l'alimentation du réfrigérateur 5.

Si le col 12d du dispositif de calibrage 10 avait un diamètre constant la perte de charge croîtrait avec le carré du débit. Mais du fait de l'augmentation de diamètre avec le débit, la perte de charge croît moins vite. Le débit de l'eau traversant le moteur 2 est ainsi toujours suffisant pour le refroidir.

Il va de soi que la présente invention ne doit pas être considérée comme limitée au mode de réalisation décrit et représenté, mais en couvre, au contraire, toutes les variantes. C'est ainsi que dans une variante non représentée, le ressort 13 pourrait être remplacé par une partie torique non fendue, venue de moulage avec la bague 12.

## Revendications

1. Dispositif de refroidissement par eau de l'huile d'une boîte de vitesse automatique dont le refroidisseur (5) a son entrée et sa sortie reliées à la conduite (4) reliant le radiateur (2) et la pompe à eau (1) du circuit de refroidissement du moteur, de part et d'autre d'un dispositif de calibrage (10),
caractérisé en ce que ce dispositif de calibrage (10) est à diamètre variable en fonction du débit, le diamètre augmentant en même temps que le débit.

2. Dispositif selon la revendication 1,
caractérisé en ce que le dispositif de calibrage (10) comporte une partie tronconique (12b) de section décroissante d'amont en aval fendue axialement et des moyens élastiques tendant à resserrer cette partie tronconique.

3. Dispositif selon la revendication 2,
caractérisé en ce que les moyens élastiques sont constitués par un ressort annulaire (13) logé dans un bourrelet torique ouvert (12c) disposé à l'extrémité aval de la partie tronconique (12b).

4. Dispositif selon la revendication 2 ou 3,
caractérisé en ce que la partie tronconique (12b) est fendue suivant deux plans axiaux.

5. Dispositif selon la revendication 1,
caractérisé en ce qu'il comporte des moyens élastiques constitués par une partie torique (12c) venue de moulage avec une partie tronconique (12b) du dispositif de calibrage.
